# EUROPÄISCHE PATENTANMELDUNG

(11) **EP 3 066 935 A1**
(43) Veröffentlichungstag der Anmeldung: **14.09.2016**
(21) Anmeldenummer: 16157969.3
(22) Anmeldetag: 01.03.2016
(51) Int. Cl.: A23G 3/28, A23P 30/00, A23P 20/10, A23P 30/20

(54) **SYSTEM UND VERFAHREN ZUR BEARBEITUNG VON NAHRUNGSMITTELN**

(30) Priorität: 12.03.2015 DE 102015204427
(71) Anmelder: BSH Hausgeräte GmbH, 81739 München (DE)
(72) Erfinder: Rehfuss, Evgeni, 81673 München (DE); Schüssler, Andreas, 81541 München (DE); Schuster, Lucia, 80336 München (DE); Heinle, Anita, 89435 Finningen (DE); Peijan, Anne, 14789 Bensdorf (DE)

(57) **Zusammenfassung**

Es wird ein System 200 zur Bearbeitung eines Nahrungsmittels 107 beschrieben. Das System 200 umfasst ein Bearbeitungsgerät 100, das eingerichtet ist, durch eine Hand eines Nutzers geführt zu werden und dabei eine Form des Nahrungsmittels 107 zu verändern. Des Weiteren umfasst das System 200 Positionierungsmittel 240, 111, die eingerichtet sind, eine Position des Bearbeitungsgeräts 100 relativ zu dem Nahrungsmittel 107 zu ermitteln. Außerdem umfasst das System 200 eine Steuereinheit 210, die eingerichtet ist, eine Ziel-Form für das Nahrungsmittel 107 zu ermitteln, und das Bearbeitungsgerät 100 in Abhängigkeit von der Ziel-Form für das Nahrungsmittel 107 und in Abhängigkeit von der Position des Bearbeitungsgeräts 100 anzusteuern.

## Beschreibung

Die Erfindung betrifft ein System und ein entsprechendes Verfahren zur Herstellung eines Nahrungsmittels mit einem bestimmten äußeren Erscheinungsbild.

Zur Herstellung eines Nahrungsmittels (z.B. zur Herstellung eines Kuchens) wird meist ein in Textform vorliegendes und gegebenenfalls von zumindest einem Bild begleitetes Rezept verwendet, welches unterschiedliche Schritte beschreibt, die durchzuführen sind, um das Nahrungsmittel herzustellen. Das nach dem Rezept hergestellte Nahrungsmittel weicht dabei häufig (insbesondere äußerlich) von einer Vorlage ab, die z.B. in einem Bild zu dem Rezept dargestellt ist. WO2014/190217A1 und WO2014/190168A1 beschreiben Nahrungsmitteldrucker mit einem beweglichen Druckkopf. DE19510232A1 beschreibt einen Drucker, mit dem ein Lebensmittel bedruckt werden kann.

Die vorliegende Erfindung befasst sich mit der technischen Aufgabe, es einem Nutzer zu ermöglichen, in einfacher und flexibler Weise ein Nahrungsmittel zu erstellen bzw. zu bearbeiten, so dass das Nahrungsmittel ein gewünschtes äußerliches Erscheinungsbild aufweist. Dabei sollen insbesondere in zuverlässiger Weise Bearbeitungsfehler durch den Nutzer beim Erstellen bzw. Bearbeiten des Nahrungsmittels vermieden werden.

Die Aufgabe wird jeweils durch den Gegenstand eines der unabhängigen Patentansprüche gelöst. Vorteilhafte Ausführungsformen sind in den abhängigen Patentansprüchen und der nachfolgenden Beschreibung beschrieben und in der beigefügten Zeichnung bildlich dargestellt.

Gemäß einem Aspekt der Erfindung wird ein System zur Bearbeitung eines Nahrungsmittels beschrieben. Die Bearbeitung des Nahrungsmittels kann dabei insbesondere die Erstellung eines neuen Nahrungsmittels und/oder die Veränderung eines bereits bestehenden Nahrungsmittels umfassen. Das System umfasst ein Bearbeitungsgerät, das eingerichtet ist, durch eine Hand eines Nutzers geführt zu werden und dabei eine Form des Nahrungsmittels zu verändern. Das System umfasst weiter Positionierungsmittel, die eingerichtet sind, eine Position des Bearbeitungsgeräts relativ zu dem zu bearbeitenden Nahrungsmittel zu ermitteln. Insbesondere kann die Position des Bearbeitungsgeräts ermittelt werden, an der das Bearbeitungsgerät durch einen Nutzer des Geräts gehalten wird. Mit anderen Worten, anhand der Positionierungsmittel kann ermittelt werden, an welcher Stelle des zu bearbeitenden Nahrungsmittels sich das Bearbeitungsgerät befindet (d.h. an welcher Stelle des zu bearbeitenden Nahrungsmittels das Bearbeitungsgerät durch einen Nutzer gehalten wird). Das System umfasst weiter eine Steuereinheit. Die Steuereinheit kann einen Tablet PC, einen PC, ein Smartphone oder ein Haushaltsgerät wie einen Haushaltsroboter umfassen. Die Steuereinheit ist eingerichtet, eine Ziel-Form für das Nahrungsmittel zu ermitteln. Die Steuereinheit ist weiter eingerichtet, das Bearbeitungsgerät in Abhängigkeit von der Ziel-Form für das Nahrungsmittel und in Abhängigkeit von der Position des Bearbeitungsgeräts anzusteuern. Insbesondere kann das Bearbeitungsgerät derart angesteuert werden, dass das Nahrungsmittel durch das Bearbeitungsgeräts so bearbeitet wird, dass sich die Ziel-Form ergibt. Zu diesem Zweck kann ein Nutzer das Bearbeitungsgerät an das Nahrungsmittel heranführen, und die Steuereinheit steuert das Bearbeitungsgerät dann derart an, dass die Ziel-Form umgesetzt wird. Dazu kann die Steuereinheit veranlassen, dass ein Aktuator des Bearbeitungsgeräts aktiviert bzw. deaktiviert wird und/oder dass eine Geschwindigkeit und/oder eine Kraft einer durch den Aktuator bewirkten Bewegung verändert wird bzw. werden.

Das System ermöglicht es somit einem Nutzer, in einfacher und in zuverlässiger Weise ein Nahrungsmittel gemäß einer Vorgabe (insbesondere gemäß einer Ziel-Form) zu bearbeiten.

Das Bearbeitungsgerät kann eingerichtet sein, ein essbares Material zur Erstellung des Nahrungsmittels auf einen Untergrund aufzubringen und/oder ein essbares Material auf das Nahrungsmittel aufzubringen und/oder einen Teil des Nahrungsmittels zu entfernen, um die Form des Nahrungsmittels zu verändern. Zu diesem Zweck kann das Bearbeitungsgerät einen Aufsatz (ggf. aus einer Mehrzahl von austauschbaren Aufsätzen) aufweisen. Die Mehrzahl von Aufsätzen kann umfassen: ein oder mehrere Aufsätze zum Aufbringen eines essbaren Materials auf das Nahrungsmittel bzw. auf einen Untergrund, ein oder mehrere Aufsätze zum Abtragen von einem Teil des Nahrungsmittels und/oder ein oder mehrere Aufsätze zum Schneiden des Nahrungsmittels.

Die Steuereinheit kann eingerichtet sein, zu ermitteln, welcher Aufsatz aus einer Vielzahl von unterschiedlichen Aufsätzen sich auf dem Bearbeitungsgerät befindet. Die Steuereinheit kann dann eingerichtet sein, das Bearbeitungsgerät in Abhängigkeit von dem Aufsatz anzusteuern, der sich auf dem Bearbeitungsgerät befindet. Durch die Verwendung von unterschiedlichen Aufsätzen für unterschiedliche Funktionen (Aufbringen von Material und/oder Nahrungsmitteln, Entfernen von Teilen des Nahrungsmittels, etc.) können in effizienter Weise auch komplexe Nahrungsmittel (mit unterschiedlichen Materialen und/oder komplexen Formen) erstellt werden.

Zur Bestimmung der Position des Bearbeitungsgeräts können die Positionierungsmittel ein oder mehrere Sensoren umfassen: z.B. einen optischen Sensor (etwa eine Kamera), der eingerichtet ist, ein Bild des Bearbeitungsgeräts und/oder des Nahrungsmittels zu erfassen, und/oder einen Bewegungssensor, der eingerichtet ist, eine Bewegung des Bearbeitungsgeräts zu erfassen, und/oder einen Formsensor, der eingerichtet ist, die Form eines elektrischen Versorgungskabels des Bearbeitungsgeräts zu erfassen, und/oder einen Magnetsensor, der eingerichtet ist, eine Veränderung eines Magnetfeldes zu erfassen, die durch eine Bewegung des Bearbeitungsgeräts bewirkt wird.

Das System kann eine Eingabe-Einheit umfassen (z.B. als Teil eines Tablet PCs, PCs, Smartphones oder Haushaltgeräts), die es einem Nutzer ermöglicht, die Ziel-Form für das Nahrungsmittel auszuwählen und vorzugeben. Insbesondere kann über die Eingabe-Einheit ein 3D Modell des zu erstellenden Nahrungsmittels vorgegeben bzw. ausgewählt werden.

Das Bearbeitungsgerät kann eingerichtet sein, ein essbares Material (insbesondere ein verformbares Material) aufzunehmen. Das Material kann z.B. über einen entnehmbaren Behälter aufgenommen werden, wobei der Behälter das Material beinhaltet. So können durch Austausch eines Behälters in einfacher Weise die Materialen ausgetauscht werden, die mit dem Bearbeitungsgerät auf das zu bearbeitende Nahrungsmittel aufgebracht werden.

Das Bearbeitungsgerät kann einen Aktuator (z.B. einen Elektromotor) aufweisen, der eingerichtet ist, das Material durch eine Öffnung (z.B. durch eine Düse oder mehrere Düsen) aus dem Bearbeitungsgerät zu befördern. Das Material kann dann dazu verwendet werden, ein Nahrungsmittel zu erstellen, oder das Material kann auf ein zu bearbeitendes Nahrungsmittel aufgebracht werden. Die Steuereinheit kann eingerichtet sein, den Aktuator zu veranlassen, das Material in Abhängigkeit von der Ziel-Form für das Nahrungsmittel und in Abhängigkeit von der Position des Bearbeitungsgeräts durch die Öffnung des Bearbeitungsgeräts zu befördern.

Die Ziel-Form kann (z.B. als Teil eines drei-dimensionalen Modells des zu erstellenden Nahrungsmittels) anzeigen, dass das Material an einer ersten Stelle auf das Nahrungsmittel aufzubringen ist. Die Steuereinheit kann eingerichtet sein, zu detektieren, dass sich die Öffnung (z.B. die eine Düse oder die mehreren Düsen) des Bearbeitungsgeräts an der ersten Stelle befindet. Des Weiteren kann die Steuereinheit eingerichtet sein, daraufhin den Aktuator selektiv zu veranlassen, das Material durch die Öffnung aus dem Bearbeitungsgerät zu befördern und auf das Nahrungsmittel aufzubringen. Andererseits kann die Ziel-Form anzeigen, dass an einer zweiten Stelle kein Material auf das Nahrungsmittel aufzubringen ist. Die Steuereinheit kann eingerichtet sein, zu detektieren, dass sich die Öffnung des Bearbeitungsgeräts von der ersten Stelle zu der zweiten Stelle bewegt. Des Weiteren kann die Steuereinheit eingerichtet sein, automatisch einen Stopp des Aktuators zu veranlassen, wenn detektiert wird, dass sich die Öffnung des Bearbeitungsgeräts an der zweiten Stelle befindet. Somit kann in selektiver und automatischer Weise Material aufgebracht werden, um das zu bearbeitende Nahrungsmittel in die gewünschte Ziel-Form zu bringen.

Wie oben dargelegt, kann ein aufzubringendes Material über einen Behälter in das Bearbeitungsgerät eingebracht werden. Der Behälter kann Identifikationsmittel aufweisen. Beispielhafte Identifikationsmittel sind ein QR-Code, ein Barcode, ein Magnetchip, ein äußeres Erscheinungsbild des Behälters (z.B. eine Farbe und/oder eine Form), ein Identifikationsmuster und/oder eine Identifikationsnummer.

Die Steuereinheit kann eingerichtet sein, auf Basis der Identifikationsmittel Information bezüglich des Materials zu ermitteln, das sich in dem Behälter befindet. Beispielsweise kann ermittelt werden, welcher Typ von Material sich in dem Behälter befindet und/oder welche Eigenschaften das Material aufweist. Die Steuereinheit kann dann das Bearbeitungsgerät in Abhängigkeit von der Information bezüglich des Materials ansteuern. Beispielsweise kann an unterschiedlichen Stellen eines Nahrungsmittels unterschiedliches Material aufgebracht werden. Die Zuordnung von unterschiedlichen Materialien zu unterschiedlichen Stellen kann in einem dreidimensionalen Modell des zu erstellenden Nahrungsmittels spezifiziert sein. Das heißt, das dreidimensionale Modell kann eine Vielzahl von unterschiedlichen Materialen anzeigen und das dreidimensionale Modell kann die Stellen anzeigen, an denen das jeweilige Material für das zu bearbeitende bzw. zu erstellende Nahrungsmittel aufzubringen ist. Es können somit durch das System in einfacher Weise komplexe Zusammensetzungen von Nahrungsmitteln erstellt werden.

Das Bearbeitungsgerät kann eine Temperierungseinheit (zum Erwärmen oder zum Abkühlen) umfassen, wobei die Temperierungseinheit eingerichtet ist, das aufzubringende Material zu temperieren. Das drei-dimensionale Modell kann Temperierungsinformation umfassen, die anzeigt, mit welcher Temperierung ein Material aufzubringen ist. Die Steuereinheit kann eingerichtet sein, die Temperierungseinheit in Abhängigkeit von der Temperierungsinformation anzusteuern. Somit kann die Qualität eines erstellten Nahrungsmittels erhöht werden.

Gemäß einem weiteren Aspekt der Erfindung wird ein Verfahren zur Bearbeitung eines Nahrungsmittels durch ein handgeführtes Bearbeitungsgerät beschrieben, das eingerichtet ist, eine Form des Nahrungsmittels zu beeinflussen bzw. zu bearbeiten (z.B. zu verändern). Das Verfahren umfasst das Ermitteln einer Ziel-Form für das zu bearbeitende Nahrungsmittel. Des Weiteren umfasst das Verfahren das Ermitteln einer Position des Bearbeitungsgeräts relativ zu dem zu bearbeitenden Nahrungsmittel. Außerdem umfasst das Verfahren das Ansteuern des Bearbeitungsgeräts in Abhängigkeit von der Ziel-Form für das zu bearbeitende Nahrungsmittel und in Abhängigkeit von der Position des Bearbeitungsgeräts.

Gemäß noch einem weiteren Aspekt wird ein Software(SW)-Programm beschrieben. Das SW-Programm kann eingerichtet werden, um auf einem Prozessor (z.B. auf einer Steuereinheit) ausgeführt zu werden, und um dadurch das erfindungsgemäße Verfahren auszuführen.

Gemäß wieder einem weiteren Aspekt wird ein Speichermedium beschrieben. Das Speichermedium umfasst ein SW-Programm, welches eingerichtet ist, um auf einem Prozessor ausgeführt zu werden, und um dadurch das erfindungsgemäße Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der hierin beschriebenen Verfahren, Vorrichtungen und Systeme in vielfältiger Weise miteinander kombiniert werden. Insbesondere können die Merkmale der Patentansprüche in vielfältiger Weise miteinander kombiniert werden.

Nachfolgend werden bevorzugte Ausführungsbeispiele der Erfindung, die in den Figuren der beigefügten Zeichnung dargestellt sind, näher beschrieben. Dabei zeigen:
Figur 1 ein beispielhaftes handgeführtes Bearbeitungsgerät für ein Nahrungsmittel;
Figur 2 ein Blockdiagramm eines Systems zur Bearbeitung eines Nahrungsmittels; und
Figur 3 ein Verfahren zur Bearbeitung eines Nahrungsmittels.

Wie eingangs dargelegt, befasst sich das vorliegende Dokument mit der Herstellung eines Nahrungsmittels. Insbesondere soll es einem Nutzer ermöglicht werden, in einfacher Weise ein Nahrungsmittel zu bearbeiten, so dass das Nahrungsmittel eine gewünschte äußere Erscheinungsform aufweist. Dabei kann im Rahmen der Bearbeitung ein neues Nahrungsmittel hergestellt werden bzw. es kann die äußere Erscheinungsform eines bereits existierenden Nahrungsmittels verändert werden.

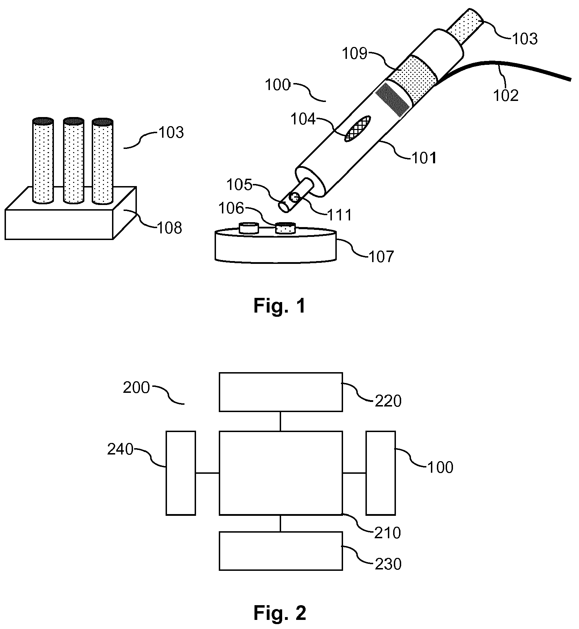

Fig. 1 zeigt in diesem Zusammenhang ein Bearbeitungsgerät 100, welches durch einen Nutzer mit der Hand geführt werden kann. Das Bearbeitungsgerät 100 umfasst ein Gerätegehäuse 101, welches derart geformt ist, dass es in einer Hand des Nutzers gehalten werden kann. Das Gerät 100 umfasst eine Stromversorgung, wobei der elektrische Strom z.B. über ein elektrisches Stromkabel 102 und einen Netzstecker und/oder über einen Akkumulator oder mehrere Akkumulatoren bereitgestellt werden kann. Dieser kann bzw. diese können bei Einsetzen des Geräts 100 in eine Ladestation (nicht dargestellt) und/oder durch Induktion aufgeladen werden.

Das Gerät 100 kann weiter eine Temperierungseinheit (nicht dargestellt) umfassen, die eingerichtet ist, Material 106, das auf das zu bearbeitende Nahrungsmittel 107 aufzubringen ist, zu temperieren, zu schmelzen und/oder zu kühlen. Das aufzubringende Material 106 wird über eine Kartusche, eine Patrone, oder über einen andersartigen Behälter 103 oder in fester Form direkt in das Gerät 100 eingebracht, z.B. an einer Seite des Geräts 100, die bei Bearbeitung eines Nahrungsmittels 107 von dem Nahrungsmittel 107 abgewandt ist. Das aufzubringende Material 106 kann einen festen, flüssigen, zähen, pulverförmigen, oder anderweitigen Zustand aufweisen.

Über eine Kontrolltaste 104 kann durch einen Nutzer ein Fluss von Material 106 aus einer Düse 105 oder mehreren Düsen 105 des Geräts 100 gesteuert werden. Insbesondere kann durch Betätigung der Kontrolltaste 104 ein Motor 109 des Geräts 100 veranlasst werden, das Material 106 über die Düsen 105 aus dem Gerät 100 und auf ein zu erstellendes Nahrungsmittel 107 zu bewegen. Beispielsweise kann ein viskoses Material 106 zur Verzierung eines Keks 107 aufgebracht werden. In einer Aufbewahrungsvorrichtung 108 können eine Vielzahl von Behältern 103 mit unterschiedlichen Materialien 106 aufbewahrt und bei Bedarf in dem Gerät 100 verwendet werden.

Das Gerät 100 kann insbesondere in einer Küchenumgebung eingesetzt werden. Neben der rein manuellen Führung des Geräts 100 kann ein semi-automatisierter Betrieb ermöglicht werden.

Fig. 2 zeigt ein Blockdiagramm eines Systems 200 mit dem ein semi-automatisierter Betrieb eines Bearbeitungsgeräts 100 bereitgestellt werden kann. Das System 200 umfasst eine Steuereinheit 210, die eingerichtet ist, das Gerät 100 zumindest teilweise zu steuern. Insbesondere kann ein Motor 109 des Geräts 100 durch die Steuereinheit 210 aktiviert bzw. deaktiviert werden. Des Weiteren umfasst das System 200 Positionierungsmittel 240, die eingerichtet sind, eine Position des Geräts 100 im Raum zu ermit teln. Die Positionierungsmittel 240 können z.B. einen Sensor 111 am Gerät 100 (z.B. einen Bewegungssensor) umfassen. Insbesondere können die Positionierungsmittel 240 eingerichtet sein, die Position des Geräts 100 optisch, magnetisch oder anderweitig zu erkennen.

Die Steuereinheit 210 ist eingerichtet, 3D (dreidimensionale) -Daten eines Modells für ein Nahrungsmittel zu ermitteln, das mit dem Gerät 100 hergestellt werden soll. Die 3D-Daten (d.h. ein 3D-Modell des zu bearbeitenden Nahrungsmittels) können aus einer Speichereinheit 220 bezogen werden. Die Position und weitere Parameter des Geräts 100 können ermittelt und mit dem 3D-Modell abgeglichen werden. Wenn erkannt wird, dass die Realisierung des 3D-Modells gefährdet ist (z.B. wenn erkannt wird, dass die Gefahr besteht, dass das Nahrungsmittel 107 zerstört wird oder Material 106 an einer falschen Stelle aufgebracht wird), können Parameter des Geräts 100 derart geregelt werden, dass der Fehler vermieden wird. Beispielsweise kann eine Drehzahl des Geräts 100 verändert werden, es kann eine Extrusionsgeschwindigkeit verändert werden, es kann eine Oszillation des Geräts 100 reduzieren werden, etc. Das Gerät 100 kann einen Knopf aufweisen, mit dem die automatische Unterstützung unterbunden wird. So kann eine bewusste Abänderung der vordefinierten Form des Nahrungsmittels 107 ermöglicht werden.

Mit dem Gerät 100 kann somit ein Nutzer eine Vielzahl von 3D-Geometrien aus Nahrungsmitteln herstellen. Die 3D-Geometrien können auf einem im Vorhinein von dem Nutzer definierten und/oder konstruierten, bzw. auf einem ausgewählten, gescannten und/oder heruntergeladenen 3D-Modell basieren. Die Herstellung eines Nahrungsmittels 107 kann subtraktiv, trennend und/oder additiv erfolgen. Zu diesem Zweck kann das Gerät 100 mit unterschiedlichen Aufsätzen versehen werden, z.B. mit einem Aufsatz zum Trennen bzw. Schneiden, mit einem Aufsatz zum Fräsen und/oder mit einem Aufsatz zum Auftragen von Material 106 (wie in Fig. 1 dargestellt). Diese Aufsätze können manuell auf das Gehäuse 101 aufgesetzt werden.

Das Gerät 100 kann über die Steuereinheit 210 (z. B. über einen Tablet-PC, einen PC oder ein Smartphone) gesteuert bzw. geregelt werden. Des Weiteren kann ein Nutzer über eine Eingabe/Ausgabe-Einheit 230 Einstellungen an dem Gerät 100 vornehmen und/oder ein Modell des zu erstellenden Nahrungsmittels 107 auswählen und ggf. an das Gerät 100 senden. Dies kann über eine drahtlose Verbindung (z.B. Bluetooth, NFC und/oder WLAN) erfolgen. Die Kommunikation kann auch über ein Kabel erfolgen, welches z.B. Sensoren aufweist, die die Form und Ausrichtung des Kabels im Raum registrieren. Aus diesen Informationen kann eine Position des Geräts 100 im Raum ermittelt werden.

Wie oben dargelegt, kann das Gerät 100 vollständig manuell oder semi-automatisiert betrieben werden. Bei einem manuellen Betrieb hat der Nutzer die vollständige Kontrolle über die Position, über die Bewegung und über die von dem Gerät 100 ausgeführten Aktionen. Im semi-automatisierten Betrieb verfolgt die Steuereinheit 210 die Position und die Bewegung des Geräts 100. Diese Informationen werden mit dem vom Nutzer ausgewählten 3D-Modell für das zu bearbeitende Nahrungsmittel 107 abgeglichen. Besteht die Gefahr, dass der Nutzer die Geometrie des 3D-Modells in der Realität zerstört, kann die Steuereinheit 210 automatisch eingreifen und die Aktionen des Geräts 100 steuern bzw. regeln. Beispielhafte Aktionen des Geräts 100 sind Dosieren, Sprühen, Temperieren, Rotieren, Oszillieren, etc.

Durch das Gerät 100 werden eine additive Materialaufbringung (z.B. Extrudieren, Sprühen, Spritzen), eine subtraktive Materialabtragung (z.B. Fräsen, Bohren, Gravieren) und/oder ein trennendes Verfahren (z.B. Schneiden, Filetieren) ermöglicht. Zu diesem Zweck können durch das Gerät 100 verschiedene Aufsätze wie z.B. Messerschneide, Fräskopf, Bohrkopf, Bohrer, Spritzöffnung, Sprühkopf, etc. aufgenommen werden. Diese Aufsätze können durch einen Aktuator 109 oder mehrere Aktuatoren 109 (z.B. Motoren) angetrieben werden. Es kann so eine (mehrachsige) Translation, Rotation, Oszillation, Kraftübertragung, Druckerzeugung etc. erfolgen. Ein Aufsatz des Geräts 100 kann entsprechend einem 3D-Modell für ein Nahrungsmittel 107 angesteuert werden. Dabei können Parameter wie Position, Drehzahl, Extrusionsgeschwindigkeit, Sprühdruck, Amplitude, etc. angepasst werden.

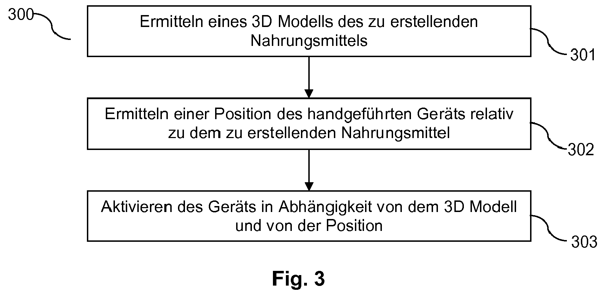

Fig. 3 zeigt ein beispielhaftes Verfahren 300 zur Bearbeitung eines Nahrungsmittels 107, durch ein handgeführtes Bearbeitungsgerät 100. Das Bearbeitungsgerät 100 ist eingerichtet, eine Form des Nahrungsmittels 107 zu beeinflussen (insbesondere durch Aufbringen von einem essbaren Material 106 und/oder durch Abtrennen eines Teils des Nahrungsmit tels 107). Das Verfahren 300 umfasst das Ermitteln 301 einer Ziel-Form für das Nahrungsmittel 107. Beispielsweise kann ein 3D-Modell eines zu erstellenden Nahrungsmittels 107 ermittelt werden. Das 3D-Modell bzw. die Ziel-Form können das äußere Erscheinungsbild des zu erstellenden Nahrungsmittels 107 anzeigen.

Das Verfahren 300 umfasst weiter das Ermitteln 302 einer Position des Bearbeitungsgeräts 100 relativ zu dem Nahrungsmittel 107. Insbesondere kann ermittelt werden, an welcher Stelle des Nahrungsmittels 107 sich das Bearbeitungsgerät 100 (z.B. eine Düse 105 des Bearbeitungsgeräts 100) befindet. Dabei kann das Bearbeitungsgerät 100 mit der Hand eines Nutzers gehalten und mit der Hand an unterschiedliche Positionen relativ zu dem Nahrungsmittel 107 geführt werden. Es kann im Rahmen des Verfahrens 300 die Position des Bearbeitungsgeräts 100 ermittelt werden, an der das Bearbeitungsgerät 100 (zu einem bestimmten Zeitpunkt) von dem Nutzer gehalten wird. Das Bearbeitungsgerät 100 kann dann in Abhängigkeit von der Ziel-Form für das Nahrungsmittel 107 und in Abhängigkeit von der Position des Bearbeitungsgeräts 100 angesteuert werden (Schritt 303). So können auch komplexe Ausgestaltungen von Nahrungsmitteln 107 in einfacher und zuverlässiger Weise durch einen Nutzer umgesetzt werden.

Das in diesem Dokument beschriebene System 200 bzw. Gerät 100 ermöglicht es einem Nutzer, in einfacher Weise ein Nahrungsmittel 107 herzustellen, das eine gewünschte (ggf. auch komplexe) Geometrie aufweist. Insbesondere können in einfacher Weise gewünschte 3D-Modelle eines Nahrungsmittels umgesetzt werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. System (200) zur Bearbeitung eines Nahrungsmittels (107), wobei das System (200) umfasst,
- ein handgeführtes Bearbeitungsgerät (100), das eingerichtet ist, durch eine Hand eines Nutzers geführt zu werden und dabei eine Form des Nahrungsmittels (107) zu verändern;
- Positionierungsmittel (240, 111), die eingerichtet sind, eine Position des Bearbeitungsgeräts (100) relativ zu dem Nahrungsmittel (107) zu ermitteln; und
- eine Steuereinheit (210), die eingerichtet ist,
- eine Ziel-Form für das Nahrungsmittel (107) zu ermitteln; und
- das Bearbeitungsgerät (100) in Abhängigkeit von der Ziel-Form für das Nahrungsmittel (107) und in Abhängigkeit von der Position des Bearbeitungsgeräts (100) anzusteuern.

2. System (200) gemäß Anspruch 1, wobei
- das Bearbeitungsgerät (100) einen Aufsatz aus einer Vielzahl von austauschbaren Aufsätzen aufweist; und
- die Steuereinheit (210) eingerichtet ist,
- zu ermitteln, welcher Aufsatz sich auf dem Bearbeitungsgerät (100) befindet; und
- das Bearbeitungsgerät (100) in Abhängigkeit von dem Aufsatz anzusteuern, der sich auf dem Bearbeitungsgerät (100) befindet.

3. System (200) gemäß Anspruch 2, wobei die Vielzahl von Aufsätzen umfasst:
- ein oder mehrere Aufsätze zum Aufbringen eines Materials (106) auf das Nahrungsmittel (107) und/oder auf einen Untergrund;
- ein oder mehrere Aufsätze zum Abtragen eines Teils des Nahrungsmittels (107); und/oder
- ein oder mehrere Aufsätze zum Schneiden des Nahrungsmittels (107).

4. System (200) gemäß einem der vorhergehenden Ansprüche, wobei
- das Bearbeitungsgerät (100) eingerichtet ist, ein Material (106) aufzunehmen;
- das Bearbeitungsgerät (100) einen Aktuator (109) aufweist, der eingerichtet ist, das Material (106) durch eine Öffnung (105) aus dem Bearbeitungsgerät (100) zu befördern; und
- die Steuereinheit (210) eingerichtet ist, den Aktuator (109) zu veranlassen, das Material (106) in Abhängigkeit von der Ziel-Form für das Nahrungsmittel (107) und in Abhängigkeit von der Position des Bearbeitungsgeräts (100) aus dem Bearbeitungsgerät (100) zu befördern.

5. System (200) gemäß Anspruch 4, wobei
- das Bearbeitungsgerät (100) eingerichtet ist, das Material (106) in einem entnehmbaren Behälter (103) aufzunehmen;
- der Behälter (103) Identifikationsmittel aufweist; und
- die Steuereinheit (100) eingerichtet ist,
- auf Basis der Identifikationsmittel, Information bezüglich des Materials (106) zu ermitteln, das sich in dem Behälter (103) befindet; und
- das Bearbeitungsgerät (100) in Abhängigkeit von der Information bezüglich des Materials (106) anzusteuern.

6. System (200) gemäß Anspruch 5, wobei die Identifikationsmittel ein oder mehrere umfassen von:
- einen QR-Code;
- einen Barcode;
- einen Magnetchip;
- ein äußeres Erscheinungsbild des Behälters (103);
- ein Identifikationsmuster; und/oder
- eine Identifikationsnummer.

7. System (200) gemäß einem der Ansprüche 4 bis 6, wobei
- die Ziel-Form Teil von einem drei-dimensionalen Modell eines zu erstellenden Ziel-Nahrungsmittels ist; und
- das drei-dimensionale Modell eine Vielzahl von unterschiedlichen Materialen (106) des zu erstellenden Ziel-Nahrungsmittels anzeigt.

8. System (200) gemäß Anspruch 7, wobei
- das Bearbeitungsgerät (100) eine Temperierungseinheit umfasst, die eingerichtet ist, das aufzubringende Material (106) zu temperieren;
- das drei-dimensionale Modell Temperierungsinformation umfasst, die anzeigt, mit welcher Temperierung ein Material (106) aufzubringen ist; und
- die Steuereinheit (210) eingerichtet ist, die Temperierungseinheit in Abhängigkeit von der Temperierungsinformation anzusteuern.

9. System (200) gemäß einem der Ansprüche 7 bis 8, wobei
- das drei-dimensionale Modell anzeigt, dass das Material (106) an einer ersten Stelle auf das Nahrungsmittel (107) aufzubringen ist; und
- die Steuereinheit (210) eingerichtet ist,
- zu detektieren, dass sich die Öffnung (105) des Bearbeitungsgeräts (100) an der ersten Stelle befindet; und
- daraufhin, den Aktuator (109) zu veranlassen, das Material (106) auf das Nahrungsmittel (107) aufzubringen.

10. System (200) gemäß Anspruch 9, wobei
- das drei-dimensionale Modell anzeigt, dass an einer zweiten Stelle kein Material (106) auf das Nahrungsmittel (107) aufzubringen ist; und
- die Steuereinheit (210) eingerichtet ist,
- zu detektieren, dass sich die Öffnung (105) des Bearbeitungsgeräts (100) von der ersten Stelle zu der zweiten Stelle bewegt; und
- einen Stopp des Aktuators (109) zu veranlassen, wenn detektiert wird, dass sich die Öffnung (105) des Bearbeitungsgeräts (100) an der zweiten Stelle befindet.

11. System (200) gemäß einem der vorhergehenden Ansprüche, wobei
- die Positionierungsmittel (240, 111) ein oder mehrere Sensoren umfassen; und
- die ein oder mehreren Sensoren umfassen:
- einen optischen Sensor, der eingerichtet ist, ein Bild von dem Bearbeitungsgerät (100) und/oder von dem Nahrungsmittel (107) zu erfassen;
- einen Bewegungssensor, der eingerichtet ist, eine Bewegung des Bearbeitungsgeräts (100) zu erfassen;
- einen Formsensor, der eingerichtet ist, die Form eines Versorgungskabels (102) des Bearbeitungsgeräts (100) zu erfassen; und/oder
- einen Magnetsensor, der eingerichtet ist, eine Veränderung eines Magnetfeldes zu erfassen, die durch eine Bewegung des Bearbeitungsgeräts (100) bewirkt wird.

12. System (200) gemäß einem der vorhergehenden Ansprüche, wobei das System (200) eine Eingabe-Einheit (230) umfasst, die es einem Nutzer ermöglicht, die Ziel-Form für das Nahrungsmittel (107) vorzugeben.

13. System (200) gemäß einem der vorhergehenden Ansprüche, wobei die Steuereinheit (210) eingerichtet ist,
- einen Aktuator (109) des Bearbeitungsgeräts (100) zu aktivieren bzw. zu deaktivieren; und/oder
- eine Geschwindigkeit und/oder eine Kraft einer durch den Aktuator (109) bewirkten Bewegung zu verändern.

14. System (200) gemäß einem der vorhergehenden Ansprüche, wobei die Steuereinheit (210) einen Tablet PC, einen Computer, ein Smartphone oder ein Haushaltsgerät umfasst.

15. Verfahren (300) zur Bearbeitung eines Nahrungsmittels (107) durch ein handgeführtes Bearbeitungsgerät (100), das eingerichtet ist, eine Form des Nahrungsmittels (107) zu bearbeiten; wobei das Verfahren (300) umfasst,
- Ermitteln (301) einer Ziel-Form für das Nahrungsmittel (107);
- Ermitteln (302) einer Position des Bearbeitungsgeräts (100) relativ zu dem Nahrungsmittel (107); und
- Ansteuern (303) des Bearbeitungsgeräts (100) in Abhängigkeit von der Ziel-Form für das Nahrungsmittel (107) und in Abhängigkeit von der Position des Bearbeitungsgeräts (100).
